(19)

**Europäisches Patentamt**
**European Patent Office**
**Office européen des brevets**

(11) **EP 4 391 818 B1**

(12) **EUROPEAN PATENT SPECIFICATION**

(45) Date of publication and mention
of the grant of the patent:
**27.05.2026 Bulletin 2026/22**

(21) Application number: **22769626.7**

(22) Date of filing: **26.08.2022**

(51) International Patent Classification (IPC):
*A23G 3/34* (2006.01)  *A23G 3/44* (2006.01)
*A23G 3/48* (2006.01)  *A23G 3/52* (2006.01)

(52) Cooperative Patent Classification (CPC):
**A23G 3/44; A23G 3/346; A23G 3/48; A23G 3/52**

(86) International application number:
**PCT/EP2022/073775**

(87) International publication number:
**WO 2023/025935 (02.03.2023 Gazette 2023/09)**

(54) **AERATED CONFECTIONERY**

LUFTDURCHSETZTE SÜSSWARE

CONFISERIE AÉRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2021 EP 21193520**

(43) Date of publication of application:
**03.07.2024 Bulletin 2024/27**

(73) Proprietor: **Société des Produits Nestlé S.A.
1800 Vevey (CH)**

(72) Inventors:
• **CELIGUETA TORRES, Isabel
York Yorkshire YO10 3UP (GB)**

• **LAZIDIS, Aristodimos
York Yorkshire YO30 4UH (GB)**

(74) Representative: **Slaven, John William
Société des Produits Nestlé S.A.
Avenue Nestlé 55
1800 Vevey (CH)**

(56) References cited:
EP-B1- 1 327 390     CN-A- 110 049 689
RU-C1- 2 279 229     US-A1- 2009 181 145
US-A1- 2014 314 934   US-A1- 2014 335 255
US-A1- 2015 272 170   US-A1- 2017 295 835
US-A1- 2020 100 524   US-A1- 2020 214 314
US-A1- 2020 305 477   US-A1- 2021 076 723

**EP 4 391 818 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

This invention relates to a plant-based, water-based aerated confectionery product and methods of making the same. In particular, the invention relates to stable acidic aqueous mousses comprising aggregated plant-derived protein and sugar.

### Background of the Invention

Aerated confectionery products have been eaten for a long time. They are made in both artisanal and industrial processes. Over the last decade, the food and beverage industry has seen a dramatic increase in demand for products that utilise plant-based alternatives to traditional animal derived ingredients. However, as many animal derived ingredients play a vital functional role in creating and maintaining desirable food structures, finding suitable replacements to these can be extremely challenging. The substitution of well-established ingredients for plant-based alternatives is not as simple as a straight swap when it comes to replicating functionality, especially where specific food microstructures are required.

In chocolate confectionery the format, production method and distribution channel requires products to be microbiologically stable in ambient conditions for typically 9 to 12 months. This is practically achieved by ensuring that the water activity of the product is low enough to prevent the proliferation of pathogenic bacteria, yeasts and moulds. The upper limit of water activity for chocolate products is 0.67. Products with a wafer or biscuit element have lower water activity requirements (typically less than 0.45) to protect the typical sensory characteristics of elements that are sensitive to moisture.

This low water activity is usually achieved by avoiding of the use of water-based systems, which in turn explains the primary use of fat-based fillings in confectionery. Fat based fillings can be successfully aerated, but are perceived as "heavy" and the texture that they provide is far from the mousses, milkshakes and whipped creams that consumers associate with aerated structures. From a nutritional point of view, fat-based fillings also contain saturated fatty acids (SFA) and generally have higher calorific value than sugars, which are the main constituent of water-based systems.

Water-based systems have a lighter and softer perception, are free of SFA and have lower calorific value, but contribute significantly to the sugars of the product. The water activity of these systems is challenging because all of the solids are suspended in water, which although limited, can significantly increase the water activity. This can be addressed either by replacing part of the water with a sugar alcohol that has high humectancy (e.g. sorbitol or glycerol) or by increasing of the solids of the system by adding more sugar. The choice of sugars is important to achieve a system that still flows in high total solids and around 20°C. Also, the sugars in the system should not crystallise over time, because they are in a metastable state at this high TS. This technology is known to the art and although the use of sugar alcohols is prevalent, consumers are not entirely comfortable with them on the label.

The main benefit of water-based confectionery fillings is that they have a softer texture that can be easily modulated with the use of a hydrocolloid. They also deliver very efficiently water-based flavours such as those from fruits, coffee and caramel. Finally, they do not contribute to the fat or SFA content of the product and have a lower price than vegetable fats.

The aeration of water based systems is possible but a surface active species such as a protein or surfactant is required, whereas in fat systems the fat crystals stabilise the gas bubbles. This together with the fact that the viscosity is lower (to gain the advantage of a soft texture) makes it very challenging to provide stable gas bubbles throughout the shelf-life of an aerated water-based product.

WO-A-2014/017525 describes a low-fat or fat-free air bubble-containing emulsion, which contains a whey protein aggregate. Ice creams are described and the overrun (volume increase, or "whippability") stability was measured at -18°C. The pH levels for the protein aggregate solution are 5.5 - 7 (neutral pH).

EP1839495 B1 describes whey protein micelles and their use in protein enriched frozen desserts. The pH of this product is between 5.8-6.6.

WO-A-2018148390A1 describes a shelf-stable mousse mixed with a fat-containing product.

EP-A-3197293 describes whippable food products, whipped food products, and methods of making the same. The whippable food product has less than 5% by weight fat and includes about 0.5% to about 30% by weight of a dietary fiber; about 50% to about 95% by weight of water; up to about 5% by weight of a protein; up to about 5% by weight of a food starch; up to about 5% by weight of an emulsifier; and up to about 5% by weight of a hydrocolloid.

US7,700,144 B2 describes high protein aerated food compositions. The compositions comprise hydrocolloids and added fibre.

WO-A-2007/008560 A9 describes stabilized edible foams and formulations for palatable foams with enhanced stability. In certain embodiments, the formulations include a base liquid (such as milk), a surfactant, a polysaccharide, and a polymer capable of molecular interaction with the polysaccharide.

EP1327390 describes a method for aerating carbohydrate containing food products by using a vegetable protein hydrolysate as whipping agent characterised in that the whipping agent is obtained by converting the vegetable protein by hydrolysis in an aqueous solution with a pH of at least 10 to a peptide product having an average chain length in the range of 5-20 amino acids and a free amino acid level less than 15 wt.% of the total protein derived material.

CN110049689 describes a glycerin- and protein-based foam confectionery product comprising probiotics having a water content of less than 9% and a water activity (aw) of less than 0.5, and comprising a) an amount of at least 5% (w/w) glycerol, b) at least one sugar or at least one polyol other than glycerol, or a mixture thereof, c) at least one protein that is not gelatin, and d) at least one probiotic species, and optionally e) at least one hydrocolloid.

US2020/305477 describes an egg-free albumen replacement composition comprising a starch; an edible gum; and a hydrolyzed pea protein in an amount of 3 to 75 wt. %, based on the combined weights of the starch, edible gum and hydrolyzed pea protein in the replacement composition, wherein at least some of the hydrolyzed pea protein comprises partially hydrolyzed pea protein.

Typically, the aeration of water based systems relies on animal-derived proteins such as whey protein, as described above. However, there is a growing need for products with non-animal derived ingredients, driven by consumers with dietary allergies or environmental, ethical, moral and religious objections to consuming animal products.

In food applications where a low pH is required in order to produce the desired flavour profiles, aqueous systems of whey protein isolate (WPI) can exhibit excellent foaming characteristics. Its high solubility at low pH make it particularly attractive as a primary foaming agent in acidic liquids (e.g. coffee, fruit juices etc.). An effective plant-based substitution to WPI for such applications would therefore be one with high foamability and solubility around pH3, when used in similar concentrations.

One particular class of plant-based ingredients that have been investigated with regards to their foam forming capacity are proteins derived from legumes (e.g. soya, chickpea, pea). For example, the aqueous solution of proteins and carbohydrates obtained by simply soaking chickpeas in water (aquafaba) has been shown to exhibit foamabilities comparable to egg white albumen under the same conditions. However, these plant-derived proteins are often found to have limitations at low pH conditions in their native states.

There remains a need for improved plant-based foods with textures and appearances that are appealing to consumers while having nutritional benefits and favourable manufacturing and storage characteristics.

## Summary of the Invention

The invention pertains to the subject-matter of the claims.

The invention relates to plant-based, aqueous aerated confectionery such as mousses and foams that are stabilized against drainage and sugar crystallisation using plant-derived proteins. In particular, the invention relates to acidic aerated aqueous confectionery comprising plant -derived protein and sugar. The protein is hydrolysed pea protein (HPP). The sugar is preferably a blend of different sugars, more preferably comprising fructose.

A first aspect of the invention provides a water-based aerated confectionery comprising sugar and plant-derived protein, having a pH less than 5.5 and a water activity less than 0.67. The pH is preferably between pH 2 and pH 5, more preferably around pH 3 to pH 4. The water activity is preferably above 0.45 and below 0.67, for example 0.5 to 0.6. In some embodiments, the water activity is below 0.64 or below 0.59.

The confectionery comprises 30wt% to 90wt% sugar and between 1wt% to 8wt% plant-derived protein. The protein stabilises the water-based aerated confectionery.

The confectionery is water-based and not fat-based.

The water-based aerated confectionery comprises water. This may be present as part of a sugar syrup or other ingredient (e.g. flavouring such as fruit juice), and/or as separately added water. Inverted sugar syrup usually contains around 20wt% to 30wt% water or around 20wt% to 25wt% water, for example around 23wt% of the exemplified inverted "IS221" syrup is water.

When separately added, the water is preferably added at between 0.1wt% and 10wt% of the total ingredients, for example 1wt% to 15wt%, 1wt% to 10wt%, 1wt% to 8wt%, 2wt% to 8wt% or 3wt% to 7wt% . The total water content from all sources is preferably greater than 5wt% and less than 40wt%, more preferably 30wt% or less, for example 10wt% to 30wt%. In some embodiments, the water content is between 10wt% and 20wt%, for example around 14wt%, 15wt% or 16wt%, or such as around 10wt%, 11wt%, 12wt%, 13wt%, 17wt%, 18wt%, 19wt% or 20wt%. In one embodiment, the total water content from all sources is between around 20wt% and 27wt%, for example around 25wt%, or around 21wt%, 22wt%, 23wt%, 24wt%, 26wt% or 27wtt%.

In most preferred embodiments, the total water content is from 10wt% to 30wt%, preferably between 12wt% and 27wt% and more preferably between 15wt% and 25wt%.

The wt% water content may be determined by measuring the amount of water in the sample by Karl Fischer titration that is based in the reaction of water with iodine in the presence of sulphur dioxide. The determination involves a known weight of sample to be mixed in a methanol, n-hexane solvent and then titrated with Karl Fischer reagent (which consists of iodine, sulfur dioxide, a base and a solvent, such as alcohol) up to the equivalence point which is detected by voltammetry and the amount of water is defined allowing the calculation of the humidity of the sample.

The aerated confectionery has a water activity below 0.67, preferably above 0.45 and below 0.67. In some embodiments, the water-based aerated confectionery has a water activity of no greater than 0.64, no greater than 0.62, or no greater than 0.59. The water activity is preferably greater than 0.45. The water activity may be between 0.5 and 0.59, for example around 0.54, in some embodiments. Suitable water activities according to the invention include 0.66, 0.65, 0.64, 0.63, 0.62, 0.61, 0.60, 0.59, 0.58, 0.57, 0.56, 0.55, 0.54, 0.53, 0.52, 0.51, 0.50, 0.49, 0.48, 0.47 and 0.46. Preferred water activities include 0.64, 0.63, 0.62, 0.61, 0.60, 0.59, 0.58, 0.57, 0.56, 0.55, 0.54, 0.53, 0.52, 0.51 and 0.50.

The term water activity ("Aw") is well known in the art, and refers to is the partial vapor pressure of water in a solution divided by the standard state partial vapor pressure of water. In the field of food science, the standard state is most often defined as the partial vapor pressure of pure water at the same temperature. Using this particular definition, pure distilled water has a water activity of exactly one. A water activity of 0.80 means the vapor pressure is 80 percent of that of pure water. Water activity values are preferably obtained by either a resistive electrolytic, a capacitance or a dew point hygrometer, as known in the art. Water activity values according to the invention are most preferably determined by enclosing a sample in a sealed container. The relative humidity of the air in the headspace will equilibrate with the water activity of the sample. At equilibrium, the two will be equal, and the relative humidity of the headspace can be measured using an electrical capacitance sensor to determine the water activity of the sample.

The aerated confectionery is preferably a mousse or a foam.

The aerated confectionery has a pH less than 5.5, preferably between 2 and 5.4. In some embodiments, the aerated confectionery has a pH of about 4.2 or less, for example a pH of between 2 and 4.2, a pH of between 2 and 4, a pH of between 2.5 and 4, a pH between 2.5 and 3.5, or a pH between 2.9 and 3.1 for example around pH 3. In some embodiments, the pH is above 2.9.

In preferred embodiments, the pH is between 2 and 4.2, preferably between 2.25 and 4, preferably between 2.5 and 3.75, and most preferably between 3.0 and 3.75. As shown in the Examples below, these pH ranges provide the optimum balance between whipping properties and textures (which impacts depositing properties), as well as contributing to the overall taste in a positive manner.

The pH is preferably measured at ambient conditions, preferably at a temperature of 20°C, using equipment known in the art.

The pH of the water-based aerated confectionery compositions of the present invention may be provided by the ingredients per se without the need for additional pH modification. However, if pH lowering is required, a food-grade acid is preferably added to aid pH control. For example, food-grade acids that may be used are preferably selected from the group consisting of acetic acid, citric acid, tartaric acid, malic acid, folic acid, fumaric acid, and lactic acid and mixtures thereof. The acid may be added in any suitable form, e.g. powder. In a preferred embodiment, the water-based aerated confectionery comprises the acid in an amount of between 0.1wt% and 5.0wt%, preferably 0.2wt% and 3.5wt%, and more preferably between 0.3wt% and 3.0wt%, preferably these ranges relate to the weight of the acid and not the weight of any solvent (e.g. water). Preferably these percentages relate to the dry weight of the acid added, preferably in the form of a powder.

In some embodiments, the pH is between 2 to 4, for example around 3, and the water content is between 10wt% and 20wt%, for example around 14wt%.

The protein may preferably be aggregated. The aggregated protein is preferably induced to aggregate by heat, for example heating to a temperature 50°C or greater, 60°C or greater, 70°C or greater or 80°C or greater, for example between 50°C and around 100°C, between 60°C and around 100°C, between 60°C and around 100°C, for example between 50°C and around 95°C. In some embodiments, the protein is segregated by heating to between 80°C and 95°C. Alternatively, the aggregation may be induced by exposure to acid pH, for example pH 2 to 5, such as pH 2, 3, 3.5 or 4. The protein can be aggregated prior to its inclusion in the confectionery, although the production process may be simplified when the protein is added to the confectionery mixture in a native (unaggregated) form and aggregated, for example by heating or contact with the acidic confectionery, as part of the confectionery production process.

In a preferred embodiment, the aggregation may take place over a time period of greater than 2 minutes, greater than 5 minutes or greater than 10 minutes. For example, the time period may be less than 1 hour, less than 45 minutes or less than 30 minutes. For example, between 2 minutes and 1 hour.

The aggregated protein is aggregated plant-derived protein.

The plant-derived protein is added in the form of hydrolysed pea protein, which terms are known in the art. Hydrolysed pea protein contains a high proportion of hydrolysed pea proteins, so can conveniently be used. Hydrolysed pea protein typically contains a number of different proteins, including globulins, albumins and glutenins.

In a preferred embodiment, the plant protein concentrate or isolate comprises preferably between 40wt% and 100wt% protein, preferably between 50wt% and 90wt% or between 60wt% and 80wt%.

The 1wt% to 8wt% of protein in the confectionery of the invention is the wt% of actual protein, not the wt% of the protein concentrate or isolate that can be used to provide the protein. For example, when 1wt% protein is required in the confectionery, 1.12wt% of a protein isolate comprising 90wt% protein can be used to provide the required 1wt% protein. In another example, when 5wt% protein is required in the confectionery, 6.25wt% of a protein concentrate comprising 80wt% protein can be used to provide the required 5wt% protein.

The hydrolysed pea protein, is present at between 1wt% to 8wt% of the confectionery. In some embodiments, the plant-derived protein is present in an amount between 2wt% to 8wt% of the confectionery, or in an amount between 2wt% to 5wt% of the confectionery optionally at least 2wt% or at least 3wt%. Examples of suitable amounts include around 1.5wt%, 2wt%, 2.5wt%, 3wt%, 3,5wt%, 4wt%, 4.5wt%, 5wt%, 5.5wt% and 6wt%, and all ranges between those exemplary amounts. In some embodiments, the protein is present at 2.5wt% to 8wt%, 2.5wt% to 6wt%, or 2.75wt% to 6wt%.

The aerated confectionery comprises 30wt% to 90wt% sugar, for example sugar between 40wt% and 90wt%. In some embodiments, the sugar is present at between 40wt% and 80wt%, between 40wt% and 70wt%, between 50wt% and 90wt%, between 50wt% and 90wt%, or between 60wt% and 90wt%. In some embodiments, the sugar is present at between 70wt% and 90wt%, for example between 75wt% and 90wt%, such as between 80wt% and 90wt%.

In some embodiments, the sugar is a sugar syrup. Suitable sugar syrups include fully inverted sugar syrup, glucose syrup preferably at 40 to 70 Dextrose Equivalent ("DE"), fructose glucose syrup (may also be termed glucose fructose syrup, isoglucose or fructose corn syrup), high fructose syrup, corn syrup, oat syrup, rice syrup carob extract syrup or tapioca syrup, or a mixture of any two or more of these syrups.

Undesirable crystallisation of the sugar in the aerated confectionery is reduced or avoided, in particular when the sugar comprises or consists of two or more different sugars. In one embodiment, the blend of different sugars is provided by an invert sugar with a sugar conversion percentage (i.e. degree of hydrolysis) at least 10% but below 70%, below 60%, below 50% or below 40%. In some embodiments, the sugar is an invert sugar with a sugar conversion percentage (i.e. degree of hydrolysis) of 20% to 60%, 30% to 50% or 40% to 50%. Invert sugars with incomplete conversion (hydrolysis) are known as partial invert sugars.

This mixture of sugars in the confectionery may comprise a mixture of at least one reducing sugar and at least one non-reducing sugar. Sucrose is a non-reducing sugar while dextrose and fructose are reducing sugars. A partial invert syrup comprises sucrose (non-reducing), dextrose (reducing) and fructose (reducing). The sugar in the aerated confectionery preferably comprises at least 10% but less than 70% reducing sugars, with the remainder being non-reducing sugars. In some embodiments, the sugar comprises 10% to 60% reducing sugars, 20% to 60% reducing sugars, or 30% to 50% reducing sugars. The Examples demonstrate the use of a sugar mixture comprising 40wt% to 50wt% (specifically 41wt% to 49wt%) reducing sugars. The mixture of reducing sugar and non-reducing sugar can be provided as a partially-inverted sugar syrup.

A fully hydrolysed (~97% inverted) invert syrup, in which essentially all sucrose is broken down to dextrose and fructose, may crystallise in aerated products. A partially hydrolysed syrup, for example hydrolysis above 10% but below 70%, preferably less than 60% hydrolysed (inverted) is more stable according to the present invention and is resistant to crystallisation.

Invert sugar may be fully inverted sugar syrup or partially inverted sugar syrup. Fully inverted sugar syrup comprises only glucose and fructose. Partially-inverted sugar syrup comprises glucose, fructose and sucrose, and is preferred.

In one embodiment, the sugar in the confectionery comprises or consists of partially hydrolysed invert syrup. In another embodiment, the sugar comprises or consists of a mix of sucrose, partially or fully-inverted syrup, and glucose. In a further embodiment, the sugar comprises or consists of a mixture of sucrose, fructose and glucose.

The presence of fructose in the sugar mix is highly preferred. Preferably, between 10wt% and 50wt% of the sugar (i.e. from 1/10 to ½ of the sugars, preferably at least 1/5) is fructose. More preferably, around 20wt% to 30wt%, for example 20wt% to 25wt% of the sugars are fructose. This can be achieved either by blending different sugar rich ingredients (such as powder sugars, starch derived syrups or inverted sugar syrups) or by using a partially inverted sugar syrup comprising sucrose, dextrose and fructose.

Accordingly, a mixture of sugars is preferably used according to the invention.

In a preferred embodiment, the aerated confectionery comprises a sugar mix and the confectionery comprises 5wt% to 30wt% sucrose, 5wt% to 30wt% glucose syrup and 35wt% to 75wt% fructose glucose syrup.

In a more preferred embodiment, the aerated confectionery comprises a sugar mix and the confectionery comprises 10wt% to 25wt% sucrose, 10wt% to 25wt% glucose syrup and 45wt% to 65wt% fructose glucose syrup.

In a preferred embodiment, the aerated confectionery comprises 40wt% to 85wt% total monosaccharides and disaccharides, preferably 50wt% to 80wt%, and more preferably 60wt% to 80wt%.

In a highly preferred embodiment, the above compositions comprising a sugar mix have a pH of about 4.2 or less, for example a pH of between 2 and 4.2, and preferably a pH of between 2 and 4, and more preferably a pH of between 2.5 and 4.

When sugar syrup is used, this can conveniently provide the aqueous component of the confectionery so that additional water is not required. For example, in some embodiments a confectionery of the invention can consist essentially of sugar syrup, aggregated protein and one or more flavourings. In some embodiments, the confectionery comprises, consists of or consists essentially of 50wt% to 90wt% (e.g. 65wt% to 90wt%) invert (partial or full, preferably partial) sugar syrup, 1wt% to 8wt% (e.g. 2wt% to 6wt%) aggregated protein, and the balance provided by flavours or other agents.

As shown in the Examples, stable aerated confectioneries have been provided consisting of sugar syrup, aggregated hydrolysed protein and flavouring. The syrup may be present in some embodiments at 50wt% to 90wt%, 65wt% to 90wt%, 75wt% to 90wt%, or 90wt% to 90wt%. The aggregated protein may be present at any amount describe herein, for example 1wt% to 8wt%, 2wt% to 6wt% or 3wt% to 5wt%, for example around 2.5wt% or more, around 3wt% or more, around 4wt% or more, or around 5wt%. The flavouring may be present at between 1wt% to 30wt% of the confectionery, for example between 5wt% to 25wt% or around 10wt% to 20wt%.

A non-limiting example of a confectionery described in the Examples below, comprises 80wt% to 90wt% (e.g. 86wt% to 87wt%) sugar syrup, 3wt% to 4wt% protein and 10wt% flavouring (e.g. coffee granules). The Examples also demonstrate the successful provision of another non-limiting exemplary confectionery comprising 2wt% to 2.5wt% (e.g. 2.3wt%) aggregated protein and 65wt% to 70wt% (e.g. 68wt% to 69wt%) partially invert sugar syrup, plus flavourings.

In some embodiments, the total amount of sugar in the aerated confectionery is between 60wt% to 80wt%, or 60wt% to 70wt%.

The aerated confectionery of the invention is stabilised by the plant-derived protein. Therefore, while additional agents can optionally be included such as gelling agents or setting agents, they are not required. The aerated confectionery provides a favourable texture and mouthfeel, so fat is not required and can be excluded, thereby providing a healthier fat-free product. Accordingly, in some embodiments the water-based aerated confectionery is substantially or completely devoid of fat, hydrocolloids, gelling or setting agents and/or thickeners.

In the present invention, the terms "substantially or completely devoid of" preferably mean the aerated confectionery comprises 3wt% or less, 2wt% or less, 1wt% or less, less than 0.1wt%, or most preferably 0wt% of said ingredients.

In some highly preferred embodiments, the aerated confectionery comprises 3wt% or less, 2wt% or less, 1wt% or less, less than 0.1wt%, or most preferably 0wt% of fat.

In some embodiments, the aerated confectionery comprises 3wt% or less, 2wt% or less, 1wt% or less, less than 0.1wt%, or 0wt% of a setting agent such as gelatin or pectin.

The aerated confectionery of the invention does not require animal-derived proteins such as egg based whipping agents, including egg white proteins or purified proteins from the egg white such as the albumen. Accordingly, it is preferred that egg proteins are absent from the aerated confectionery of the invention. In some embodiments the aerated confectionery is completely devoid of egg protein. In some embodiments highly preferred the plant-derived aerated confectionery is completely devoid of any ingredients derived from eggs. In some highly preferred embodiments, the aerated confectionery comprises 3wt% or less, 2wt% or less, 1wt% or less, less than 0.1wt%, or most preferably 0wt% of ingredients derived from eggs.

The aerated confectionery of the invention does not require animal-derived proteins such as milk based whipping agents, including whey protein. Accordingly, it is preferred that whey proteins are absent from the aerated confectionery of the invention. In some embodiments the aerated confectionery is completely devoid of milk protein. In some embodiments the plant-derived aerated confectionery is completely devoid of any ingredients derived from milk. In some highly preferred embodiments, the aerated confectionery comprises 3wt% or less, 2wt% or less, 1wt% or less, less than 0.1wt%, or most preferably 0wt% of ingredients derived from milk.

The aerated confectionery of the invention does not require the addition of a surfactant. The protein preferably provides the necessary interfacial stabilisation and/or plateau border stabilisation. Therefore in some embodiments there is no added surfactant. In one embodiment, there is no artificial, synthesized or chemical surfactant. In one embodiment, there is less than 0.1wt% surfactant, or no detectable surfactant, in the aerated confectionery of the invention.

The aerated confectionery of the invention does not require a stabilizer other than the plant-derived protein.

However, in certain embodiments, to improve stabilisation, a hydrocolloid/gelling agent/setting agent/thickening agent may be present. Accordingly, in some embodiments the water-based aerated confectionery contain hydrocolloids, gelling or setting agents and/or thickeners. In some embodiments, the aerated confectionery comprises 5 wt%, or less, 3wt% or less, or 2wt% or less of the above components. In some embodiments, the aerated confectionery comprises 0.5 wt%, or more, 1wt% or more, or 1.5 wt% or more of the above components. For example, between 0.5wt% and 5 wt% or between 1wt% and 3wt%. The nature of these components is not particularly limited, however, preferably maybe gelatin or pectin and most preferably pectin. Without being bound by theory, the presence of pectin affords aggregation between the pectin and the protein to aid stabilisation.

There is preferably no fat in the aerated confectionery, so a fat emulsifier is not required. In one embodiment, the aerated confectionery of the invention does not comprise an emulsifier.

The aerated confectionery of the invention does not require fibre. In one embodiment, the aerated confectionery of the invention is very low fibre or free of fibre.

In some embodiments, the water-based aerated confectionery has a bulk viscosity of at least 10Pa.S, for example 10Pa.S to 50Pa.S or preferably 10-25Pa.s. More preferably, the confectionery has a viscosity around 10-20Pa.S, most preferably 10-18 Pa.S or 10-16 Pa.S.

The viscosity recited above may be assessed as follows, preferably at 25 °C. Rheological properties of the non-aerated masses were measured by performing oscillatory rheolometry. These measurements were performed using a Physica MRC 500 rheometer (Anton Paar) equipped with a sanded Couette geometry (CC27-SN23479) and a Peltier system for temperature control. The Couette geometry was composed of a cup (14.46 mm radius) and a bob system (13.33 mm radius, 40 mm length). Samples were covered with a low-viscosity silicone oil (Sigma Aldrich Ltd, Singapore) to avoid evaporation during measurements. The sample rested for 5 minutes at 25 °C before starting the experiments. The imposed frequency (1 Hz) and strain (0.5%) during oscillatory shear measurements were chosen within the linear response regime.

The aerated confectionery can be very significantly aerated with an overrun of at least 50%, for example around 100% or more. The overrun can be at least 125% or at least 150% in some embodiments. The overrun may be as high as up to 500% in some embodiments.

The overrun is preferably 60% to 200%, more preferably 60% to 160%.

In some embodiments, the confectionery is aerated to a bulk density of 0.9 gr/cm$^3$ or less, 0.8gr/cm$^3$ or less, for example 0.6gr/cm$^3$ or less, such as around 0.4g/cm$^3$. By controlling the upper limit of the density, the whippability of the water-based aerated confectionery compositions is preferably optimised. A lower number for bulk density means more aeration. In some embodiments, the confectionery is aerated to a bulk density of 0.1gr/cm$^3$ or more, for example 0.2gr/cm$^3$ or more, such as 0.3g/cm$^3$ or more. By controlling the lower limit of the density, the flow properties necessary for depositing such compositions in confectionery products is optimally controlled. Hence, in embodiments, the bulk density is between 0.1gr/cm$^3$ and 0.9gr/cm$^3$, for example between 0.2gr/cm$^3$ and 0.8gr/cm$^3$. The term bulk density is used as the density includes the total volume, i.e. includes the pores (or voids or gas etc.) present in the water-based aerated confectionery.

In a preferred embodiment, the bulk density is preferably between 0.4 gr/cm$^3$ and 0.8 gr/cm$^3$, more preferably between 0.45 gr/cm$^3$ and 0.75 gr/cm$^3$ and most preferably between 0.50 gr/cm$^3$ and 0.70 gr/cm$^3$. These density ranges provides a balance between the whippability and flow properties necessary for depositing such compositions in confectionery products, preferably confectionery shells.

The plant-based, water-based aerated confectionery of the invention preferably comprises one or more flavourings. Preferably, these flavourings contribute more than flavouring to the composition, e.g. may contribute bulk, nutritional properties etc., i.e. preferably these flavourings are not high intensity flavouring compositions. A flavouring may be included at between 1wt% to 30wt% of the confectionery, for example around 10wt% to 20wt% or 1wt% to 10wt%. The flavouring is preferably consistent with the acid (pH 5.5 or less) nature of the confectionery, i.e. the flavouring is preferably acidic and/or recognised as "tart" or "tangy". Such flavourings may comprise or consist of fruit, fruit juice, dried fruit or fruit concentrate, optionally between 10wt% and 30wt% or between 1wt% and 10wt%. Other suitable flavourings include coffee, preferably dehydrated coffee powders/granules (e.g. instant coffee) or caramel.

When coffee is used as a flavouring, the pH of the confectionery is naturally reduced. In the case of a caramel flavour a suitable acid can be added to maintain the required pH. When juice is used as the flavouring, this may or may not require supplementation with citric acid to achieve the desired pH, depending on the type and amount of juice.

When the flavouring includes sugars, for example fruit juice, dried fruit or fruit concentrate, the amount of sugar that is added as a separate ingredient is reduced accordingly.

The plant-based, water-based aerated confectionery is stable. This means that it has an acceptable shelf-life between manufacture and consumption by the consumer, so that it has an acceptable appearance, taste and texture at the point of consumption. For a mousse, this means that the mousse is recognisable as a single mass and has not begun visible separation into a liquid phase (i.e. notable drainage has not occurred), nor has visible crystallisation of the sugars occurred.

Preferably, the aerated confectionery is stable for at least one month. Stability is usually determined by what a consumer determines as acceptable, but can also be formally assessed on the basis of drainage stability, mousse collapsing and/or coarsening of the mousse bubbles as described in the Examples herein.

In simple terms, mousse or foam drainage refers to the pooling of liquid at the bottom of the foam or mousse. A stable mousse or foam is one without visible pooling after the set time period. Therefore, a mousse stable for three months does not show pooling visible by eye after three months. A foam stable for six months does not show visible pooling after six months.

The same comments apply for mousse collapsing, i.e. stable mousses do not collapse over the above time periods.

A stable mousse or foam does not show visible sugar crystallisation. A foam stable for six months does not show sugar crystallisation visible to the eye after six months.

In some embodiments, the plant-based, water-based aerated confectionery is stable for at least three months, preferably at least six months.

Stability can be assessed at ambient temperature preferably 20°C or 18°C, or at a refrigerated temperature, preferably 4°C.

In a preferred embodiment, the water based aerated confectionery of the invention is not frozen nor is baked, i.e. the present invention relates to compositions at ambient or refrigerated temperatures, preferably not exposed to temperatures below 0°C and above 100°C. Freezing or baking provides inherently different compositions from the desired aerated, "foamy" mouthfeel of the water-based compositions of this invention. Freezing provides solidified mixtures and baking water-based protein mixtures may lead to textures more akin to meringues.

In an alternative embodiment, the confectionery of the present invention may be frozen to provide a frozen confectionery. This may be achieved using well known, not particularly limited techniques, for example, using a freezer at -20°C to -18°C for a required time between 2 and 6 hours. However, the more preferred embodiments are ambient or refrigerated products.

In one embodiment, a plant-based, water-based aerated confectionary of the invention comprises 2wt% to 5wt% hydrolysed pea proteins, 10 wt% to 30wt% sucrose, 50 wt% to 80wt% invert sugar syrup, optionally 0 wt% to 2 wt% stabilizer, preferably pectin. The balance is preferably water, and optionally flavourings. Preferably, the pH is between 2 and 4.

In one non-limiting example, the plant-based, water-based aerated confectionary comprises 20 wt% sucrose, 61.1 wt% invert sugar (80 brix), 3.7 wt% HPP, 1 wt% pectin and the balance water and optionally flavourings, adjusted to pH 3.0 with citric acid.

A second aspect of the invention provides a finished confectionery product comprising the water-based aerated confectionery of the invention. Preferably, the water-based aerated confectionery forms the filling of a chocolate, candy or sweet. Accordingly, one embodiment provides the water-based aerated confectionery surrounded or encased in chocolate, preferably a chocolate shell.

A third aspect of the invention provides method of making the water-based aerated confectionery, comprising introducing air into a liquid mass, wherein the liquid mass has a pH between 2 and 5.5 and a water activity less than 0.67 and preferably greater than 0.45. The liquid mass comprises at least 30wt% sugar and between 1wt% to 8wt% protein.

The step of introducing air into the liquid mass can comprise mechanical introduction of the air (e.g. whipping) or gas injection (e.g. nitrogen gas). The method of the third aspect of the invention can comprise the step of making the liquid mass into which the air is introduced. This step can comprise mixing at least protein and sugar, optionally in water, at a temperature of 50°C or greater, preferably between 80°C and 95°C. This mixing step may comprise a two stage heating step, wherein ingredients are mixed at a first temperature (e.g. 50°C or greater) and then changed to a second, usually higher, temperature such as 70°C or greater e.g. between 80°C and 95°C. This can be useful to ensure good mixing and robust protein aggregation.

**Brief Description of the Drawings**

Figure 1 - Foam overrun measurements for 3.7wt% WPI and HPP with additions of 1.0wt% Pectin (HM), 20.0wt% Sucrose and 61.1wt% Invert Sugar at pH3.0.

Figure 2 - Foam structure data for 3.7wt% WPI and HPP solutions containing 1.0wt% HM Pectin, 20.0wt% sucrose and 61.1wt% invert sugar at pH3.0. a) Foam overruns of formulations with increasing complexity. b) Bubble size distributions. c) & d) Micrographs of WPI and HPP foams respectively.

Figure 3 - Foam overrun measurements for HPP model recipe, raspberry recipe and no-sucrose raspberry recipe.

Figure 4 - Foamed raspberry recipe incorporating 2.4wt% Pectin (HM) instead of the intended 1.0wt% Pectin (HM), at 30 minutes after production, after 3 weeks storage at room temperature (~25°C), and after 3 weeks refrigerated storage (~4°C)

**Detailed Description of the Invention**

The present inventors have developed a surprising technology based on an increased understanding of the feasibility of plant-based, water-based aerated confectionery such as fillings for chocolates. Such fillings are desired by consumers, in particular for clean-label products.

The present inventors conducted systematic studies to address the key questions: how to stabilize acidic foams and mousses using plant-derived proteins.

The key scientific challenge was how physically to stabilize aqueous mousses and foam against drainage and coarsening during mousse lifetime without the use of animal-derived proteins or other animal-derived products.

Mousses undergo two main types of destabilization i) drainage of the liquid from the bubbles, ii) collapse of structure and iii) coarsening of the bubble size distribution via coalescence and Ostwald ripening. Ostwald ripening is the transfer of air from small bubbles to the larger bubbles due to the difference in Laplace pressure.

Without wishing to be bound by theory, drainage of the mousse plateau border can be slowed by reducing liquid flow between adjacent bubbles by increasing bulk liquid viscosity (via, i) sugar type, ii) moisture content (or water activity), iii) temperature or iv) hydrocolloids and/or v) by restricting flow by clogging/plugging the plateau border with protein, preferably protein aggregates.

Coarsening of the mousse bubbles can be slowed by: i) having a viscoelastic interface that prevents coalescence and potentially slows Ostwald ripening by providing a resistance to bubble shrinkage.

The data presented in the Examples demonstrate the validity of these approaches to physically stabilizing ambient aqueous mousses and foam with plant-derived proteins.

The invention provides a plant-based, water-based aerated confectionery having a pH less than 5.5 and a water activity less than 0.67. The confectionery comprises sugar and aggregated plant-derived protein. The aggregated plant-derived protein stabilises the water-based aerated confectionery. The confectionery preferably comprises 30wt% to 90wt% sugar and between 1wt% to 8wt% aggregated plant-derived protein.

One aspect of the invention provides an aerated confectionery product, preferably a foam or a mousse, created with hydrolysed pea protein (HPP), wherein the aerated confectionery product is: acidic with a pH lower than about 5.5, highly viscous because of 30wt% to 90wt% sugar, and has a Aw of lower than 0.67, preferably between 0.5 and 0.64 or between 0.5 and 0.59. The product is stabilized by HPP that is subject to heat treatment and preferably does not contain (or only optional) hydrocolloids/thickeners.

Without wishing to be bound by theory, the viscosity is thought to control drainage in these foams. No homogenization is required because no fat is present. The aerated product is stable for several months without drainage at a temperature from 4°C up to room temperature.

Some embodiments provide a stable foam is that it is fat free, does not contain hydrocolloids or thickeners, and has a pH between 2 and 4.

The recipe below was, designed to replicate the properties of the normal fruit containing formulation. Two foaming agents were chosen for comparison, these being a Whey Protein Isolate (WPI) and a Hydrolysed Pea Protein blend (HPP). The overall pH of was matched to that of a raspberry concentrate recipe (pH3.0±0.1) using citric acid. It should be noted that invert sugars used in the model systems contained a 20% mass of water (80 Brix), which was taken into account in recipe formulation such that ratios of water to sugars were the same for model and fruit-containing recipes.

| Ingredient | % Mass |
| --- | --- |
| Sucrose | 20 |
| Sugar Inverted (80 Brix) | 61.1 |
| Water | 14.2 |
| Protein (WPI or HPP) | 3.7 |
| Pectin HM | 1.0 |
| Citric Acid | To adjust to pH 3.0 |

Model Recipe to mimic chemical composition of fruit-containing formulations.

These exemplary embodiments reflect that the invention relates to acidic aerated aqueous confectionery comprising aggregated protein and sugar.

Commonly, in the field of confectionery flavourants and colourants are added to intensify the taste and visual appeal of the products. These additives are generally intense in their properties and are added in small amounts as a highly active agent in a water-based or oilbased matrix, dependent on the solubility of the active agent. In embodiments where additives (preferably colourants and/or flavourants, preferably compounds that are added only to provide colour and/or flavouring, i.e. do not provide significant nutritional, bulking etc. properties contrary to, for example, the fruit juice concentrates mentioned above) are included in the water-based aerated confectionery, the additives are water-soluble (i.e. are not oil-soluble). It is understood that the term "soluble" has the understood meaning in the art, i.e. ability to be dissolved in a specific medium at ambient conditions, preferably at 20°C.

Aggregated Protein

The Examples demonstrate the stabilisation of acidic mousses with aggregated plant-derived hydrolysed protein, specifically hydrolysed pea protein (HPP). Heat aggregation is also shown to boost low shear bulk viscosity, thereby stabilising aerated foams and mousses.

The invention generally relates to the use of a protein to create a stabilised foam in acidic conditions in a high sugar, optionally fat-free system, or water-based system. The protein is preferably aggregated plant-derived protein. As mentioned above, the plant protein is preferably derived from a legume. A legume is a plant in the family Fabaceae (or Leguminosae), the seed of such a plant (also called pulse). Legumes are grown agriculturally, primarily for human consumption, for livestock forage and silage, and as soil-enhancing green manure.

The following legumes can be used in the product composition according to the invention: lentil, chickpea, beans, and peas, for example kidney beans, navy beans, pinto beans, haricot beans, lima beans, butter beans, azuki beans, mung beans, golden gram, green gram, black gram, urad, fava/faba beans, scarlet runner beans, rice beans, garbanzo beans, cranberry beans, green peas, snow peas, snap peas, split peas and black-eyed peas, groundnut (peanut), and Bambara groundnut. Preferably, the legume is selected from lentil, chickpea, cow pea, faba bean, and green or yellow pea. Preferably the legume is pea or faba. Preferably, the legume is pea, in particular an aggregated hydrolysed pea protein.

The aggregated protein is preferably induced to aggregate by heat, for example heating to a temperature 50°C or greater, 60°C or greater, 70°C or greater or 80°C or greater, for example 80°C to 95°C. Alternatively, the aggregation may be induced by exposure to acidic pH, preferably between pH 2 and pH 5.

In a preferred embodiment, the aggregation may take place over a time period of greater than 2 minutes, greater than 5 minutes or greater than 10 minutes. For example, the time period may be less than 1 hour, less than 45 minutes or less than 30 minutes. For example, between 2 minutes and 1 hour.

In some embodiments, the protein is present in an amount at least 2wt% of the mousse, optionally at least 2wt% or at least 2.2wt%, or at least 3wt% or 3.3wt%. Favourable effects may be obtained with higher levels of aggregated protein.

Sugars

The Examples also show the stabilisation against draining using sugars. In particular, the interaction of temperature, water content and sugar type control mousse drainage.

Mousse destabilisation caused by liquid draining can be controlled by controlling the bulk viscosity. Undesirable sugar crystallisation can also be controlled through sugar blending. Combined, these features provide aerated confectionery that are stable for weeks or months, for example 6 months or more.

The aerated confectionery is preferably high in sugar, for example comprising sugar at between 40wt% and 90wt%. In some embodiments, the total amount of sugar in the aerated confectionery is between 60wt% to 80wt%.

In some embodiments, the sugar is a sugar syrup. Suitable sugar syrups include glucose syrup preferably at 40 to 70 Dextrose Equivalent ("DE"), fructose glucose syrup, high fructose syrup, corn syrup, oat syrup, rice syrup or tapioca syrup. A mixture of two or more of these syrups can be used.

Such syrups are well known in the art. Glucose syrups are well known in the art and are obtained by hydrolysis of starches, generally vegetable starches. Glucose syrups are described in Glucose Syrups, Technology and Applications, Peter Hull, Wiley-Blackwell 2010.

In a preferred embodiment, the glucose syrup has a DE value in the range of 35-95, preferably in the range of 35-70 or 40-70, more preferably in the range of 35-63.

Similarly, fructose glucose syrups are prepared from hydrolysis of starch, generally vegetable starches, and then isomerisation to produce fructose. As in the production of conventional corn syrup, the starch may be broken down into glucose by enzymes. To make the fructose corn syrup, the corn syrup is further processed by D-xylose isomerase to convert some of its glucose into fructose. Common commercially used syrups are "HFCS 42" and "HFCS 55" and this nomenclature refers to dry weight fructose compositions of 42% and 55% respectively, the rest typically being glucose or glucose and an amount of other carbohydrates.

In a preferred embodiment, the fructose glucose syrups generally contain between 5wt% and 75wt% fructose, preferably between 20wt% and 70wt%, more preferably between 30wt% and 60wt% and more preferably between 35wt% and 55wt%. These percentages are on a dry solids basis.

In a preferred embodiment, the fructose glucose syrups generally contain between 5wt% and 75wt% glucose, preferably between 20wt% and 70wt%, more preferably between 30wt% and 60wt% and more preferably between 35wt% and 55wt%. These percentages are on a dry solids basis.

Undesirable crystallisation of the sugar in the aerated confectionery can be avoided when the sugar comprises or consists of at least two different sugars, preferably comprising fructose. A suitable blend of sugars is provided by an invert sugar with a sugar conversion percentage at least 10% but below 70%, below 60%, below 50% or below 40%. A conversion rate of 40% to 50% is shown to provide desirable results in the Examples. In some embodiments, the sugar is an invert sugar with a sugar conversion percentage (i.e. degree of hydrolysis) of 20% to 60%, 30% to 50% or 40% to 50%.

The presence of fructose in the sugar mix is highly preferred. Preferably, between 10wt% and 50wt% of the sugar (i.e. from 1/10 to ½ of the sugars, preferably at least 1/5) is fructose. More preferably, around 20wt% to 30wt%, for example 20wt% to 25wt% of the sugars are fructose. This can be achieved either by blending different sugar rich ingredients (such as powder sugars, starch derived syrups or inverted sugar syrup) or by using a partially inverted sugar syrup comprising sucrose, dextrose and fructose.

In a preferred embodiment, the aerated confectionery comprises a sugar mix and the confectionery comprises 5wt% to 30wt% sucrose, 5wt% to 30wt% glucose syrup and 35wt% to 75wt% fructose glucose syrup.

In a more preferred embodiment, the aerated confectionery comprises a sugar mix and the confectionery comprises 10wt% to 25wt% sucrose, 10wt% to 25wt% glucose syrup and 45wt% to 65wt% fructose glucose syrup.

This mixture of sugars in the confectionery may also be defined as a percentage of reducing sugars, because sucrose is a non-reducing sugar while dextrose and fructose are reducing sugars. Accordingly, the sugar in the aerated confectionery preferably comprises at least 10% but less than 70% reducing sugars, with the remainder being non-reducing sugars. In some embodiments, the sugar comprises 10% to 60% reducing sugars, 20% to 60% reducing sugars, or 30% to 50% reducing sugars. The Examples demonstrate the use of a sugar mixture comprising 40wt% to 50wt% (specifically 41wt% to 49wt%) reducing sugars. The mixture of reducing sugar and non-reducing sugar can be provided as a partially-inverted sugar syrup.

A fully hydrolysed (~97% inverted) invert syrup, in which essentially all sucrose is broken down to dextrose and fructose, may crystallise in aerated products. A partially hydrolysed syrup, for example hydrolysis above 10% but below 70%, preferably less than 60% hydrolysed (inverted) is more stable according to the present invention and does not crystallise.

In one embodiment, the sugar comprises or consists of partially hydrolysed invert syrup. In another embodiment, the sugar comprises or consists of a mix of sucrose, partially or fully-inverted syrup, and glucose. In a further embodiment, the sugar comprises or consists of a mixture of sucrose, fructose and glucose.

Accordingly, a mixture of sugars is preferably used according to the invention. Preferably the mixture comprises fructose.

Invert sugar may be fully inverted sugar syrup or, preferably, partially inverted sugar syrup. Fully inverted sugar syrup comprises only glucose and fructose. Partially-inverted sugar syrup comprises glucose, fructose and sucrose and is preferred.

Accordingly, a balance or mixture of sugars is preferably provided.

An example of a mixture of sugars used in the Examples comprises a mixture of sucrose, inverted syrup (itself containing sucrose, glucose and fructose) and glucose.

The "221" partially inverted sugar syrup used in some of the Examples is available from British Sugar plc, Peterborough, United Kingdom as "Partial Invert Syrup 221". It is a pale straw-coloured solution of white sugar in potable water, produced from sugar beet. This syrup comprises 41-49% reducing sugars as determined by Lane & Eynon titration using Fehlings solution and Methylene blue indicator. Invert 221 is a partially inverted sugar syrup so comprises a proportion of non- hydrolysed sucrose along with equal fractions of fructose and dextrose. Compared to fully inverted sugar syrup (only fructose and dextrose) it is less prone to crystallise.

An alternative to IS221 is a mix of sucrose, and fructose-glucose syrup.

In some embodiments, the total amount of sugar in the aerated confectionery is between 60wt% to 90wt%, for example 75wt% to 85wt%.

In a preferred embodiment, the aerated confectionery comprises 40wt% to 85wt% total monosaccharides and disaccharides, preferably 50wt% to 80wt%, and more preferably 60wt% to 80wt%.

Aeration

The creation of a mousse involves the introduction of air into a liquid mass, either by mechanical introduction of the air (whipping) or via gas injection (e.g. nitrogen or carbon dioxide) or both.

The present inventors created ambient stable aqueous mousses for confectionery fillings. They also demonstrated that aqueous foams of the invention can be stable for at least six months and up to 17 months.

The aerated confectionery may be filled into in a chocolate shell or coating. In some embodiments bonbon shells can be used, while in other embodiments tablets may also be used. In some embodiments, the invention provides a finished confectionery product containing the aerated filling according to the invention.

Existing equipment can be used to the produce aerated confectionery according to the invention and, optionally, filling chocolate shells with it. Apart from the normal capabilities for production of filled chocolate products (shell making, depositing, baking off) the capability of making the filling is needed. For this the mixing and cooking of water-based ingredients and subsequently aerating them is necessary. Preparation of the filling mass can take place in a batch tank with heating capabilities to 80-90 °C. Aeration of the filling can take place in a continuous aerator (e.g. Mondomix) connected to a dedicated water-based line fitted with a CIP system.

Confectionery Filling Composition

As mentioned above, the water-based aerated confectionery of the present invention is preferably a composition for providing a filling for a confectionery product.

The filing composition of the invention may be a confectionary filling for use in a composite product such as a sandwich, a biscuit, a wafer, or other composite confectionary product. The filling composition may provide a topping, e.g. for use on top of a composite product, or a spread.

However, the most advantageous use of the filling compositions of the present invention is for use as fillings in chocolate or chocolate analogue products.

This is because the present invention allows an increase in stability without significantly affecting texture nor sensory attributes of the filling and the final product. This is particularly important for confectionery products where the eating experience is key for the product.

Furthermore, a long shelf life stability is important for fillings owing to the relatively long shelf life of chocolate and chocolate analogues, i.e. the filling needs to be stable for as long as the chocolate. This is a difference of filling chocolate products as compared to making fillings for sandwich biscuits where the biscuit has a shorter shelf life than chocolate. However, for aqueous-based fillings, the control of the stability and moisture retention is particularly important for confectionery products - moisture leakage may lead to product spoiling.

An embodiment of the present invention provides a foodstuff comprising the filling composition of the present invention, preferably the foodstuff is a confectionery product, preferably a chocolate (or equivalents thereof, such as compound) product.

In a highly preferred embodiment, the present invention provides a filled chocolate or chocolate-analogue shell, filled with the filling of the present invention.

In a preferred embodiment, the filling of the present invention is not-baked, i.e. it is not included in a foodstuff which requires further cooking after the filling has been deposited.

In an embodiment, provided is a filled foodstuff product, preferably a filled chocolate product, preferably a chocolate shell filled with the filling of the invention, that comprises from 5 to 95% by weight of the product of the filling of the invention, preferably from 10 to 90%, preferably from 20 to 70% or from 30 to 50%.

Preferably, the remainder of the product being a shell of chocolate-like material such as compound or chocolate that substantially encloses (for example completely encloses) the product. Hence, in an embodiment, the chocolate-like material may comprise from 5 to 95% by weight of the product, preferably from 10 to 90%, preferably from 30 to 80% or from 50 to 70%.

Another embodiment of the invention provides a chocolate confectionery product, which comprises a filling of the present invention surrounded by an outer layer of a chocolate product, for example, a praline, chocolate shell product, a truffle, a filled-tablet and/or chocolate coated wafer or biscuit any of which may or may not be layered. The chocolate coating can be applied or created by any suitable means, such as enrobing, cold stamping (frozen cone, cold forming, etc.) or moulding.

The above embodiments relating to filled chocolate products are highly preferred.

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate). Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

According to another aspect, there is provided a composite product comprising the filling composition according to the invention. The composite product may be, for instance, a sandwich, biscuit, cracker, wafer, or bakery foodstuff product comprising the filling composition of the invention as a filling or as a topping.

Specifically, baked foodstuffs used in the invention may be sweet or savoury. Preferred baked foodstuffs may comprise baked grain foodstuffs, which term includes foodstuffs that comprise cereals and/or pulses. Baked cereal foodstuffs are more preferred, most preferably baked wheat foodstuffs such as wafer(s), cracker(s), cookie(s), muffin(s), extruded snack(s) and/or biscuit(s).

Wafers may be flat or shaped (for example into a cone or basket for ice cream) and biscuits may have many different shapes. More preferred wafers are non-savoury wafers, for example having a sweet or plain flavour.

The invention will now be described in further details in the following non-limiting examples.

**Examples**

Summary

The outlined aim of this project was to understand the contribution of plant-derived protein to the stability of an aerated, water-based confectionery system with high sugar and low pH. The system in question is a model recipe where HPP is used as a foaming agent. Such formulations could include a proportion of fruit material (concentrated juice and/or fruit puree). For this investigation, a model recipe was chosen where the fruit content was replaced by sugars, water and acid in order to maintain the total sugar content and acidity. Invert syrup was used in order to balance the type of sugars needed in order to have a final mass with an acceptable aw (0.67 or below) that would allow the microbial stability in ambient storage over a prolonged period. The type of sugars used were important in order to control the viscosity of the mass and keep it within acceptable levels for processing (aeration, pumping, deposition etc.). The expected shelf life of a product that contains fillings like these is 9 to 12 months.

**Example 1: Characteristics of Whey Protein Isolate and Hydrolysed Pea Protein Foam**

*Stabilization of foamed compositions by plant-derived proteins/protein aggregates*

Solutions of 3.7wt% Hyfoama® Hydrolysed Pea Protein (HPP) from Kerry Inc. and 3.7wt% Lacprodan® DI-9224 Whey Protein Isolate (WPI) from Arla Foods Ingredients Ltd. were produced and analysed at both their native pH's and when adjusted to pH3.0 using citric acid anhydrous.

As variations in solution viscosity can also influence surface activity, tests were also conducted with the addition of 20wt% sucrose (≥99.5%) from Sigma-Aldrich Ltd. to PH3.0 protein solutions.

Each liquid solution was prepared as described and allowed to cool to 30°C before any further analysis and processing. Cooled solutions were added to a Hobart N50 mixer (Hobart, USA) with whipping attachment and whipped for 5 minutes at speed three, before resulting foams were removed and analysed. Initial batches of 250g solution were found to be insufficient for the mixer to effectively whip. In order to account for this, batch sizes were doubled to 500g.

Foam overrun describes the volume increase in percentage of a liquid solution after foaming, giving a numerical indication of its 'foamability'. This value may vary strongly depending on the foaming process undertaken as well as the properties of the liquid solution. For example, shorter whipping times could produce higher overruns due to the incorporation of larger bubbles into a solution that do not pack as efficiently as smaller bubbles, therefore resulting in a larger foam volume (higher overrun). Conversely, a shorter whipping time may incorporate less air into the system overall, therefore producing a smaller foam volume (lower overrun).

In order to measure overrun, liquid samples were placed into a clear sample pot, filling it to the brim before weighing it on a digital balance to 3 decimal places. After foaming, the pot was filled again and levelled using a steel rule before weighing. Overrun was then calculated according to Equation 1:

$$Overrun\ [\%] = \left(1 - \frac{Foamed\ pot\ weight}{Liquid\ pot\ weight}\right) \times 100 \qquad (1)$$

The clear pots ensured that efficient filling of the foamed sample pots could be monitored, as poor filling would have dramatically influenced the final measurements. However, problems arose due to the formation of a pressurised air cavity at the base of the pot during sample loading. This inevitably meant more physical manipulation of the foams, as well as poor quality filling. In order to overcome this, a series of 1mm holes were made around the base of foam pots, removing the cavity and allowing fast, efficient sample loading.

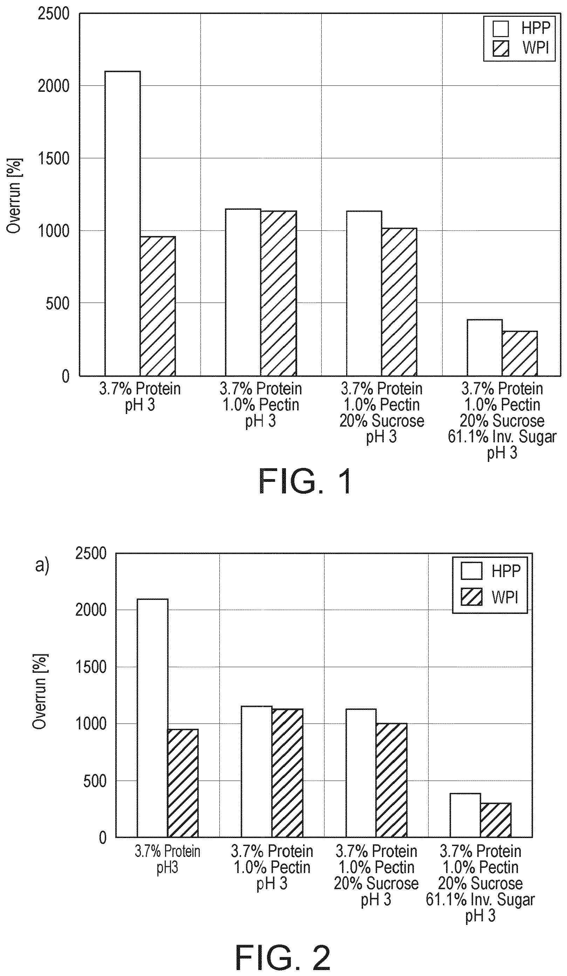

There was a marked difference in overrun between the pure proteins at pH3, where HPP overrun was approximately double that of WPI at 2094% and 949% respectively. (Figure 1)

**Example 2: Stabilization of aerated compositions with plant-derived protein**

*Stabilization of ambient aqueous foams by plant-derived proteins/protein aggregates*

The creation of a mousse, especially a mousse with an acidic pH, requires the use of surface active molecules that stabilize the interface of the air bubbles. The key role of the emulsifier is initially to facilitate bubble creation by lowering interface tension and rapidly to stabilize them against coalescence both during the mechanical whipping process and long term during storage. The present invention is focussed on the substitution of WPI with a commercially available hydrolysed pea protein (HPP) to create a highly stable, low pH, aqueous foam system, where high methoxyl (HM) pectin and sucrose were used as thickeners. The zeta potentials and surface tensions of these systems prior to foaming were used to assess the functionality of proteins, with the comparability of foams measured based on overrun, structure and rheology.

**Materials**

The physical and chemical properties of the foam liquid phase is fundamental to the formation, structure and subsequent longevity of foam systems. The formulation in Table 1 describes a low pH, high sugar foam, where either WPI or HPP were the primary foaming agents, while high methoxyl (HM) pectin, sucrose and invert sugar (80 brix) were used as viscosity modifiers to aid foam stability. Acidity was adjusted to pH 3.0 using additions of citric acid.

As shown above in Example 1, HPP alone produces more overrun than WPI alone. However, the substitution of well-established ingredients for plant-based alternatives is not as simple as a straight swap when it comes to replicating functionality, especially where specific food microstructures are required. The present inventors have found that HPP maintains its advantageous properties in a model recipe, designed to replicate the properties of the normal fruit containing formulation.

HPP was obtained in the form of Hyfoama® Hydrolysed Pea Protein from Kerry Inc., while WPI consisted of Lacprodan® DI-9224 Whey Protein Isolate from Arla Foods Ingredients Ltd. Sucrose (≥99.5%) was obtained from Sigma-Aldrich Ltd. (UK). Standard commercially available sugar invert and anhydrous citric acid were used. The HM pectin used was Grindsted® Pectin XSS 100 (DuPont Danisco) derived from citrus peel. Water was purified onsite to 15.0 MΩ·cm before use.

**Table 1. Formulation for high sugar, low pH foam with either WPI or HPP as primary foaming agents.**

| Ingredient | % Mass |
| --- | --- |
| Sucrose | 20 |
| Sugar Invert (80 Brix) | 61.1 |
| Water | 14.2 |
| Protein (WPI or HPP) | 3.7 |
| Pectin HM | 1.0 |
| Citric Acid | To adjust to pH 3.0 |

**Sample Preparation**

Dry and wet ingredients were weighed out separately using a digital balance. Wet ingredients (water and sugar invert) were covered with cling film and placed on a laboratory hotplate/stirrer before heating to a temperature of 80°C while stirring continuously. This heating step was implemented to increase the dissolution rate of the added pectin and proteins and enhance aggregation, therefore avoiding the formation of powder aggregations that took a considerable time to disperse once formed. The high solubility of sucrose meant that it could be added during the heating of the liquid ingredients.

Proteins and pectin were added gradually over a period of 30 minutes at 80°C while stirring continuously to avoid the formation of powder aggregations. This was found to be a particular issue when using WPI as the stabilising protein, whereas HPP was found to disperse far more readily.

In order to reach the desired pH3.0, a digital pH probe was used to record pH during the gradual addition of citric acid powder. Upon reaching pH3.0, the solution was recovered and stirred for a further 10 minutes at 80°C. The solution was then allowed to cool to room temperature (~21°C) before foaming and/or analysis was conducted.

Cooled solutions were added in batches of 500g to a Hobart N50 mixer (Hobart, USA) with whipping attachment and whipped for 5 minutes at speed 3, before the resulting foams were removed and analysed. Foams were immediately transferred to plastic sample pots and sealed prior to storage in order to minimise the impact of sample transfer on foam structure.

**Sample Analysis**

**_Optical Microscopy_**

Physical features of the unfoamed samples and subsequently formed foam structures were observed using a Leica DM 2500 LED Microscope (Leica Microsystems GmbH, Germany) in either bright field transmission (BF) or Differential Interference Contrast (DIC) modes. These were acquired over a range of magnifications in order to highlight the presence of physical structures across the micrometre and millimetre length scales.

As foam bubble sizes were found to be below the resolution of more sophisticated, nondestructive imaging techniques (e.g. X-ray Microtomography), bubble size distributions were also obtained via optical microscopy. Bubble counts and areas were measured using appropriate image thresholding and analysis in ImageJ software (NIH, UK), with bubble areas converted to approximate bubble diameters by assuming a spherical shape (appropriate for the cases here).

**_Foam Overrun_**

In order to measure foam overruns, liquid samples were placed into a clear sample pot, filling it to the brim before weighing it on a digital balance to 3 decimal places. After foaming, the pot was filled again and levelled before weighing. Overrun was then calculated according to Equation 1:

$$Overrun\ [\%] = \left(1 - \frac{Foamed\ pot\ weight}{Liquid\ pot\ weight}\right) \times 100 \qquad (1)$$

**_Foam Half-Life_**

In order to measure foam stability, foam heights were monitored in order to obtain values for the foam half-life, $t_{1/2}$, which describes the amount of time taken for foam height to reach half its initial value. Foams were stored at room temperature (~21°C) and despite initial constant monitoring using a time-lapse camera setup, it was clear that half-lives would far exceed the duration of this study. After this, foam heights were monitored visually once a month.

**Foaming of Formulations**

Average foam overruns of 389% and 309% were measured for the complete HPP and WPI formulations of Table 1, showing the anticipated increase in HPP foamability over WPI foamability (Figure 2a).

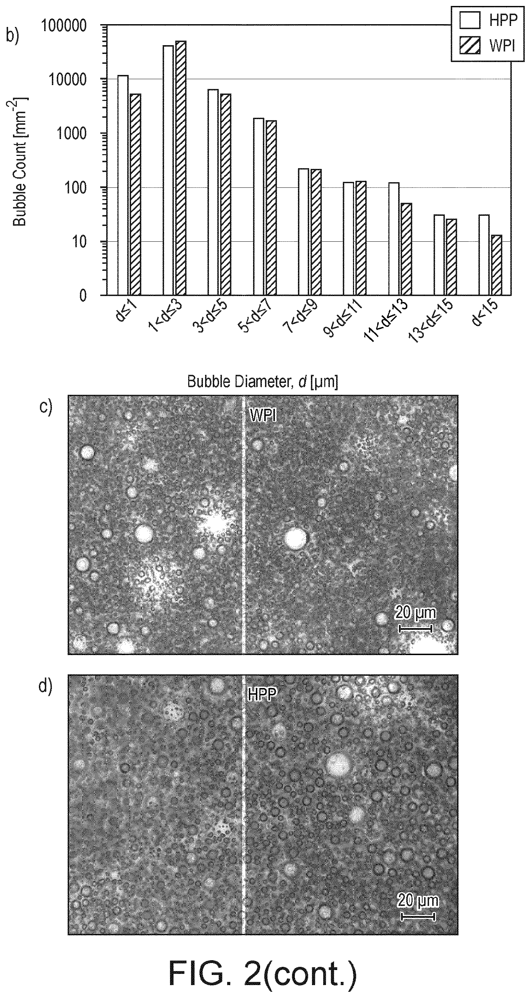

The foam structures showed little difference from a structural analysis, with evenly dispersed, spherical bubbles (Figures 2c and 2d) of similar size distribution for both formulations (Figure 2b). Overall, bubbles for both recipes ranged in diameter, d, from $0\mu m < d < 20\mu m$, with average bubble diameters of $1\mu m < d < 3\mu m$ and little variation in bubble counts over the mid-range of $5\mu m < d \leq 11\mu m$. The greatest variations were seen for the largest and smallest bubbles, such that HPP exhibited a greater degree of polydispersity than WPI. The approximate total bubble count per square millimetre was higher for WPI than HPP with an increase of 1.6%. This was primarily due to the 22% higher incidence of smaller bubbles in the range $1\mu m < d \leq 3\mu m$, producing a higher bubble packing density. The higher packing density of bubbles and the 105% reduction of larger bubbles $d > 11\mu m$ for WPI correlated well with its reduced overrun in comparison to HPP.

A key point that should be noted regarding WPI foams was that despite their many similarities to HPP foams, the presence of solid WPI-pectin aggregates remained a major issue. While both foams had a smooth appearance, closer inspection of WPI revealed the presence of a dispersion of large solid aggregates that could be as large as 3mm in size. It is suspected that these resulted from the initial aggregations formed between WPI and pectin and would have been expected to have a significant impact on foam texture. HPP foams did not suffer from this problem.

Another key difference is the impact of sucrose on the overrun of foams stabilized by HPP and WPI. The overrun of HPP reduced by 14% in formulations containing sucrose, suggesting sucrose to have had virtually no effect on the system, whereas the overrun of WPI showed a 117% reduction upon addition of 20wt% sucrose

**Foam Stability**

Both WPI and HPP foams of the formulation of Table 1 exhibited exceptional longevity at room temperature (~21°C), with half-lives exceeding 17 months after formation. Foam stability followed the anticipated trend of increasing with increased foam viscosity due to the inclusion of thickeners (i.e. HM pectin, sucrose and sugar invert). Without wishing to be bound by theory, this was most likely the due to the resulting reduction in liquid drainage, in combination with the trend of reduced bubble size and bubble-bubble contact, which act to reduce disproportionation and bubble rupture.

**Example 3. HPP Raspberry Juice Concentrate Recipes**

The fruit recipes selected for comparison were two formulations of a raspberry juice concentrate, one directly comparable to the model formulation and one replacing sucrose for invert sugar. Recipes were calculated such that the ratios of protein, pectin, water and sugars were the same for all. These are given in Tables 2 and 3. A further recipe contained pectin at 2.4wt%.

**Table 2: Raspberry Juice Concentrate Foam Recipe**

| Ingredient | % Mass |
|---|---|
| Sucrose | 20 |
| Sugar Invert (80 Brix) | 38.6 |
| Water | 6.7 |
| Protein (WPI or HPP) | 3.7 |
| Pectin HM | 1.0 |
| Raspberry Juice Concentrate (60 Brix) | 30.0 |

**Table 3: No-Sucrose Raspberry Juice Concentrate Foam Recipe**

| Ingredient | % Mass |
|---|---|
| Sugar Invert (80 Brix) | 63.6 |
| Water | 1.7 |
| Protein (WPI or HPP) | 3.7 |
| Pectin HM | 1.0 |
| Raspberry Juice Concentrate (60 Brix) | 30.0 |

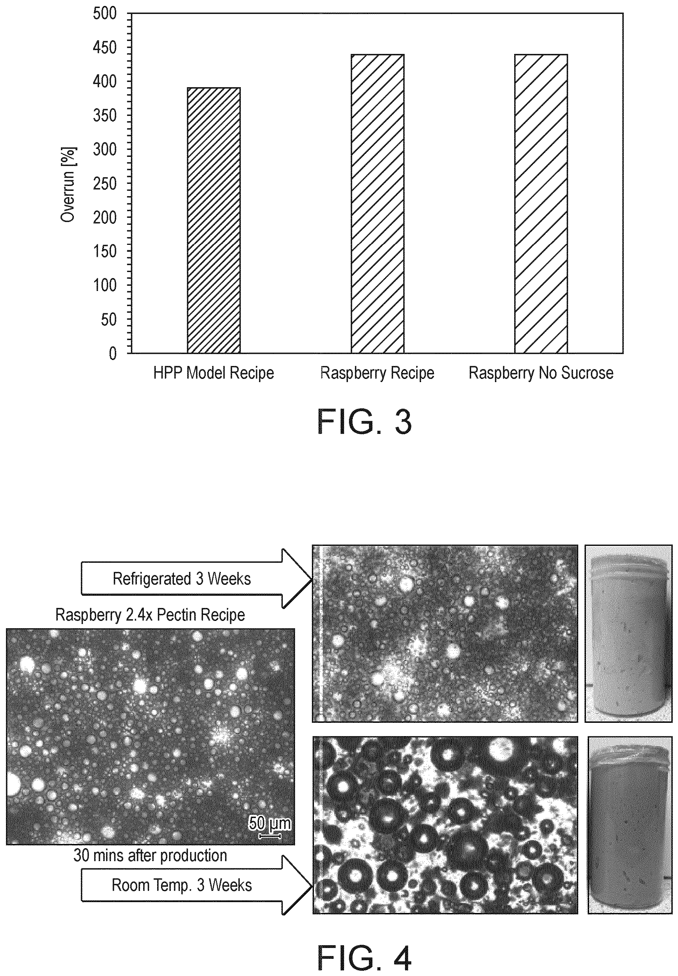

Whipping of raspberry solutions given in Table 2 and 3 produced virtually identical foam overruns (Figure 3). Little difference was seen between the original raspberry recipe and the no-sucrose raspberry recipe in terms of foamability.

Figure 4 shows an example of microscopy images from a variation of the raspberry recipes where the pectin content was increased from 1.0wt% to 2.4wt%. After three weeks, little appreciable increase in liquid height could be seen for these foams, suggesting that the foams were stable and had a long half-life.

Overall it was deemed that HPP was not only a suitable plant-based substitution for WPI in aerated confectionery, but a significant improvement in terms of its handling, flexibility of use and the resulting texture of the final foamed system. The HPP foam was found to be exceptionally stable, with preparation of the recipes being relatively fast and simple in comparison to WPI, where ingredients took longer to disperse. In addition, HPP did not present the strongly negative textural implications of large solid aggregations that were found in WPI.

It is understood that the Examples and embodiments described herein are for illustrative purposes only and that various modifications or changes in light thereof will be suggested to persons skilled in the art and are to be included within the spirit and purview of this application and scope of the appended claims. All publications, sequence accession numbers, patents, and patent applications cited herein are hereby incorporated by reference in their entirety for all purposes.

The aspects described herein are not limited to specific embodiments, apparatus, or configurations, and as such can, of course, vary. The terminology used herein is for the purpose of describing particular aspects only and, unless specifically defined herein, is not intended to be limiting.

Throughout this specification, unless the context requires otherwise, the word "comprise" and "include" and variations (e.g., "comprises," "comprising," "includes," "including") will be understood to imply the inclusion of a stated component, feature, element, or step or group of components, features, elements or steps but not the exclusion of any other integer or step or group of integers or steps.

As used in the specification and the appended claims, the singular forms "a," "an" and "the" include plural referents unless the context clearly dictates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

## Claims

1. A water-based aerated confectionery, wherein the water-based aerated confectionery:

   has a pH less than 5.5; and
   has a water activity less than 0.67; and
   comprises 30wt% to 90wt% sugar;
   comprises between 1wt% to 8wt% plant-based protein,

   wherein the protein stabilises the water-based aerated confectionery and wherein the protein is hydrolysed pea protein.

2. A water-based aerated confectionery according to claim 1, wherein the confectionery is a mousse or a foam.

3. A water-based aerated confectionery according to claim 1 or claim 2, wherein the protein is aggregated, preferably heat-induced aggregated protein or acid-induced aggregated protein.

4. A water-based aerated confectionery according to any preceding claim, wherein the protein is present in an amount at least 2wt% of the aerated confectionery, optionally at least 2wt%, at least 2.2wt%, at least 3wt% or at least 3.3wt%.

5. A water-based aerated confectionery according to any preceding claim, comprising sugar at between 40wt% and 90wt%, wherein the sugar comprises or consists of:

   at least two different sugars; or
   an invert sugar with a sugar conversion percentage between 10% and 70%,
   between 10% and 65%, between 20% and 60%, or between 40% and 60%.

6. A water-based aerated confectionery according to claim 5, wherein at least two sugars are present, wherein one of the sugars is fructose that forms at least 20wt% of the total sugar content.

7. A water-based aerated confectionery according to claim 5 or claim 6, comprising sugar at 60wt% to 80wt%.

8. A water-based aerated confectionery according to any preceding claim, which is completely devoid of 1, 2, 3, 4, 5, 6, 7 or 8 of the following:

   Animal-derived products;
   fat;
   hydrocolloids;
   surfactants;
   emulsifiers;

dietary fibre;
gelling agents;
thickeners; and
egg-derived products.

9.  A water-based aerated confectionery according to any preceding claim, wherein the water activity of the aerated confectionery is greater than 0.45 and no greater than 0.64 or no greater than 0.59.

10. A water-based aerated confectionery according to any preceding claim, wherein the bulk viscosity of the aerated confectionery is 10-25Pa.S, optionally 10-16Pa.S.

11. A water-based aerated confectionery according to any preceding claim, having an overrun of 60% to 200%, more preferably 60% to 160%.

12. A water-based aerated confectionery according to any preceding claim, aerated to a bulk density of at least 0.8gr/cm$^3$.

13. A water-based aerated confectionery according to any preceding claim, comprising no more than 3wt%, no more than 2wt%, no more than 1wt%, less than 0.1wt% of a setting agent, optionally gelatin or pectin.

14. A water-based aerated confectionery according to any preceding claim, comprising:

   fruit, fruit juice or fruit concentrate, optionally between 10wt% and 30wt%; and/or
   one or more flavourings optionally selected from coffee, cocoa or caramel.

15. A water-based aerated confectionery according to any preceding claim, wherein the aerated confectionery is stable for at least one month, wherein stability is determined by a lack of visible drainage, foam collapse or sugar crystallisation.

16. A water-based aerated confectionery according to any preceding claim, wherein the aerated confectionery is stable for six months at 4°C or 18°C.

17. A water based aerated confectionery according to any preceding claim, comprising:

   5wt% to 25wt% fruit concentrate;
   2wt% to 4wt% protein isolate;
   80wt% to 90wt% invert sugar syrup having a conversion of less than 70%.

18. A finished confectionery product comprising a water based aerated confectionery according to any preceding claim partly or completely surrounded or encased in chocolate, preferably a chocolate shell.

19. A method of making a water-based aerated confectionery as defined in claims 1 to 17, comprising the steps of:

   (i) forming an aqueous liquid mass, wherein the aqueous liquid mass

      has a pH less than 5.5; and
      has a water activity less than 0.67;
      comprises at least 30wt% sugar; and
      comprises between 1wt% to 8wt% aggregated plant-derived protein; and

   (ii) introducing air into the aqueous liquid mass

   wherein the protein is hydrolysed pea protein.

20. A method according to claim 19, comprising the step of making the liquid mass by mixing at least the protein and sugar, optionally in water, at a temperature of 50°C or greater.

**Patentansprüche**

1. Wasserbasierte belüftete Süßwaren, wobei die wasserbasierten belüfteten Süßwaren:

   einen pH-Wert von weniger als 5,5 aufweisen; und
   eine Wasseraktivität von weniger als 0,67 aufweisen; und
   zu 30 Gew.-% bis 90 Gew.-% Zucker umfassen;
   zu zwischen 1 Gew.-% bis 8 Gew.-% pflanzliches Protein umfassen,
   wobei das Protein die wasserbasierten belüfteten Süßwaren stabilisiert
   und wobei das Protein ein hydrolysiertes Erbsenprotein ist.

2. Wasserbasierte belüftete Süßwaren nach Anspruch 1, wobei die Süßwaren eine Mousse oder ein Schaum sind.

3. Wasserbasierte belüftete Süßwaren nach Anspruch 1 oder 2, wobei das Protein aggregiert ist, vorzugsweise ein hitzeinduziert aggregiertes Protein oder ein säureinduziert aggregiertes Protein.

4. Wasserbasierte belüftete Süßwaren nach einem der vorstehenden Ansprüche, wobei das Protein in einer Menge zu mindestens 2 Gew.-% der belüfteten Süßwaren vorhanden ist, optional zu mindestens 2 Gew.-%, zu mindestens 2,2 Gew.-%, zu mindestens 3 Gew.-% oder zu mindestens 3,3 Gew.-%.

5. Wasserbasierte belüftete Süßwaren nach einem der vorstehenden Ansprüche, umfassend Zucker zu zwischen 40 Gew.-% und 90 Gew.-%, wobei der Zucker umfasst oder besteht aus:

   mindestens zwei verschiedenen Zuckern; oder
   einem Invertzucker mit einem Zuckerumwandlungsgrad zwischen 10 % und 70 %, zwischen 10 % und 65 %, zwischen 20 % und 60 % oder zwischen 40 % und 60 %.

6. Wasserbasierte belüftete Süßwaren nach Anspruch 5, wobei mindestens zwei Zucker vorhanden sind, wobei einer der Zucker Fructose ist, die mindestens 20 Gew.-% des gesamten Zuckergehalts ausbildet.

7. Wasserbasierte belüftete Süßwaren nach Anspruch 5 oder 6, umfassend Zucker zu 60 Gew.-% bis 80 Gew.-%.

8. Wasserbasierte belüftete Süßwaren nach einem der vorstehenden Ansprüche, die vollständig frei sind von 1, 2, 3, 4, 5, 6, 7 oder 8 der folgenden:

   von Tieren abstammenden Erzeugnissen;
   Fett;
   Hydrokolloiden;
   Tensiden;
   Emulgatoren;
   Ballaststoffen;
   Gelierungsmitteln;
   Verdickungsmitteln; und
   von Eiern abstammenden Erzeugnissen.

9. Wasserbasierte belüftete Süßwaren nach einem der vorstehenden Ansprüche, wobei die Wasseraktivität der belüfteten Süßwaren größer als 0,45 und nicht größer als 0,64 oder nicht größer als 0,59 ist.

10. Wasserbasierte belüftete Süßwaren nach einem der vorstehenden Ansprüche, wobei die Volumenviskosität der belüfteten Süßwaren 10-25 Pa·s, optional 10-16 Pa·s, beträgt.

11. Wasserbasierte belüftete Süßwaren nach einem der vorstehenden Ansprüche, die einen Overrun von 60 % bis 200 %, mehr bevorzugt 60 % bis 160 % aufweisen.

12. Wasserbasierte belüftete Süßwaren nach einem der vorstehenden Ansprüche, die auf eine Schüttdichte von mindestens 0,8 $g/cm^3$ belüftet sind.

13. Wasserbasierte belüftete Süßwaren nach einem der vorstehenden Ansprüche, umfassend nicht mehr als zu 3 Gew.-

%, nicht mehr als zu 2 Gew.-%, nicht mehr als zu 1 Gew.-%, weniger als zu 0,1 Gew.-% ein Verfestigungsmittel, optional Gelatine oder Pektin.

14. Wasserbasierte belüftete Süßwaren nach einem der vorstehenden Ansprüche, umfassend:

Frucht, Fruchtsaft oder Fruchtkonzentrat, optional zu zwischen 10 Gew.-% und 30 Gew.-%; und/oder
ein oder mehrere Aromastoffe, die optional ausgewählt sind aus Kaffee, Kakao oder Karamell.

15. Wasserbasierte belüftete Süßwaren nach einem der vorstehenden Ansprüche, wobei die belüfteten Süßwaren für mindestens einen Monat stabil sind, wobei eine Stabilität durch ein Fehlen von sichtbarer Entwässerung, Schaumkollaps oder Zuckerkristallisation bestimmt wird.

16. Wasserbasierte belüftete Süßwaren nach einem der vorstehenden Ansprüche, wobei die belüfteten Süßwaren für sechs Monate bei 4 °C oder 18 °C stabil sind.

17. Wasserbasierte belüftete Süßwaren nach einem der vorstehenden Ansprüche, umfassend:

zu 5 Gew.-% bis 25 Gew.-% Fruchtkonzentrat;
zu 2 Gew.-% bis 4 Gew.-% Proteinisolat;
zu 80 Gew.-% bis 90 Gew.-% Invertzuckersirup, der eine Umwandlung von weniger als 70 % aufweist.

18. Fertiges Süßwarenprodukt, umfassend wasserbasierte belüftete Süßwaren nach einem der vorstehenden Ansprüche, die teilweise oder vollständig von Schokolade, vorzugsweise einer Schokoladenhülle, umgeben oder eingekapselt sind.

19. Verfahren zum Herstellen von wasserbasierten belüfteten Süßwaren nach den Ansprüchen 1 bis 17, umfassend die Schritte:

(i) Ausbilden einer wässrigen flüssigen Masse, wobei die wässrige flüssige Masse

einen pH-Wert von weniger als 5,5 aufweist; und
eine Wasseraktivität von weniger als 0,67 aufweist;
zu mindestens 30 Gew.-% Zucker umfasst; und
zu zwischen 1 Gew.-% bis 8 Gew.-% aggregiertes pflanzenbasiertes Protein umfasst; und

(ii) Einführen von Luft in die wässrige flüssige Masse,

wobei das Protein das hydrolysierte Erbsenprotein ist.

20. Verfahren nach Anspruch 19, umfassend den Schritt des Herstellens der flüssigen Masse durch ein Mischen von mindestens dem Protein und Zucker, optional in Wasser, bei einer Temperatur von 50 °C oder höher.


**Revendications**

1. Confiserie aérée à base d'eau, dans laquelle la confiserie aérée à base d'eau :

a un pH inférieur à 5,5 ; et
a une activité de l'eau inférieure à 0,67 ; et
comprend de 30 % en poids à 90 % en poids de sucre ;
comprend entre 1 % en poids et 8 % en poids de protéine d'origine végétale,
dans laquelle la protéine stabilise la confiserie aérée à base d'eau
et dans laquelle la protéine est une protéine de pois hydrolysée.

2. Confiserie aérée à base d'eau selon la revendication 1, dans laquelle la confiserie est une mousse ou une mousse légère.

3. Confiserie aérée à base d'eau selon la revendication 1 ou la revendication 2, dans laquelle la protéine est agrégée, de préférence une protéine agrégée par induction thermique ou une protéine agrégée par induction acide.

4. Confiserie aérée à base d'eau selon l'une quelconque revendication précédente, dans laquelle la protéine est présente en une quantité d'au moins 2 % en poids de la confiserie aérée, facultativement au moins 2 % en poids, au moins 2,2 % en poids, au moins 3 % en poids ou au moins 3,3 % en poids.

5. Confiserie aérée à base d'eau selon l'une quelconque revendication précédente, comprenant du sucre entre 40 % en poids et 90 % en poids, dans laquelle le sucre comprend ou est constitué de :

   au moins deux sucres différents ; ou
   un sucre inverti ayant un pourcentage de conversion de sucre compris entre 10 % et 70 %, entre 10 % et 65 %, entre 20 % et 60 %, ou entre 40 % et 60 %.

6. Confiserie aérée à base d'eau selon la revendication 5, dans lequel au moins deux sucres sont présents, dans laquelle l'un des sucres est le fructose qui forme au moins 20 % en poids de la teneur totale en sucres.

7. Confiserie aérée à base d'eau selon la revendication 5 ou la revendication 6, comprenant du sucre à raison de 60 % en poids à 80 % en poids.

8. Confiserie aérée à base d'eau selon l'une quelconque revendication précédente, qui est totalement dépourvue de 1, 2, 3, 4, 5, 6, 7 ou 8 de ce qui suit :

   produits d'origine animale ;
   matière grasse ;
   hydrocolloïdes ;
   agents tensioactifs ;
   émulsifiants ;
   fibres alimentaires ;
   agents gélifiants ;
   épaississants ; et
   produits dérivés d'œufs.

9. Confiserie aérée à base d'eau selon l'une quelconque revendication précédente, dans laquelle l'activité de l'eau de la confiserie aérée est supérieure à 0,45 et non supérieure à 0,64 ou non supérieure à 0,59.

10. Confiserie aérée à base d'eau selon l'une quelconque revendication précédente, dans laquelle la viscosité apparente de la confiserie aérée est de 10-25 Pa.S, facultativement de 10-16 Pa.S.

11. Confiserie aérée à base d'eau selon l'une quelconque revendication précédente, ayant un foisonnement de 60 % à 200 %, plus préférablement de 60 % à 160 %.

12. Confiserie aérée à base d'eau selon l'une quelconque revendication précédente, aérée à une masse volumique apparente d'au moins 0,8 g/cm$^3$.

13. Confiserie aérée à base d'eau selon l'une quelconque revendication précédente, ne comprenant pas plus de 3 % en poids, pas plus de 2 % en poids, pas plus de 1 % en poids, moins de 0,1 % en poids d'un agent fixant, facultativement de la gélatine ou de la pectine.

14. Confiserie aérée à base d'eau selon l'une quelconque revendication précédente, comprenant :

   des fruits, du jus de fruits ou du concentré de fruits, facultativement entre 10 % en poids et 30 % en poids ; et/ou
   un ou plusieurs arômes choisis facultativement parmi café, cacao ou caramel.

15. Confiserie aérée à base d'eau selon l'une quelconque revendication précédente, dans laquelle la confiserie aérée est stable pendant au moins un mois, dans laquelle la stabilité est déterminée par une absence visible d'écoulement, d'effondrement de mousse ou de cristallisation de sucre.

16. Confiserie aérée à base d'eau selon l'une quelconque revendication précédente, dans laquelle la confiserie aérée est stable pendant six mois à 4 °C ou 18 °C.

17. Confiserie aérée à base d'eau selon l'une quelconque revendication précédente, comprenant :

   5 % en poids à 25 % en poids de concentré de fruits ;
   2 % en poids à 4 % en poids d'isolat de protéine ;
   80 % en poids à 90 % en poids de sirop de sucre inverti ayant une conversion inférieure à 70 %.

18. Produit de confiserie fini comprenant une confiserie aérée à base d'eau selon l'une quelconque revendication précédente partiellement ou complètement entourée ou enfermée dans du chocolat, de préférence une coque en chocolat.

19. Procédé de préparation d'une confiserie aérée à base d'eau selon les revendications 1 à 17, comprenant les étapes consistant à :

   (i) former une masse liquide aqueuse, dans lequel la masse liquide aqueuse

      a un pH inférieur à 5,5 ; et
      a une activité de l'eau inférieure à 0,67 ;
      comprend au moins 30 % en poids de sucre ; et
      comprend entre 1 % en poids et 8 % en poids de protéine agrégée d'origine végétale ; et

   (ii) introduire de l'air dans la masse liquide aqueuse

   dans lequel la protéine est une protéine de pois hydrolysée.

20. Procédé selon la revendication 19, comprenant l'étape consistant à préparer la masse liquide en mélangeant au moins la protéine et du sucre, facultativement dans de l'eau, à une température de 50 °C ou supérieure.

FIG. 1

FIG. 2

FIG. 2(cont.)

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014017525 A
- EP 1839495 B1
- WO 2018148390 A
- EP 3197293 A
- US 7700144 B2
- WO 2007008560 A
- EP 1327390 A
- CN 110049689
- US 2020305477 A

### Non-patent literature cited in the description

- **PETER HULL**. Glucose Syrups, Technology and Applications. Wiley-Blackwell, 2010